(19) Europäisches Patentamt
European Patent Office
Office européen des brevets

(11) EP 3 313 185 B1

(12) **EUROPEAN PATENT SPECIFICATION**

(45) Date of publication and mention of the grant of the patent:
**28.10.2020 Bulletin 2020/44**

(21) Application number: **16730431.0**

(22) Date of filing: **22.06.2016**

(51) Int Cl.:
***A01N 43/40*** *(2006.01)* ***A01N 59/00*** *(2006.01)*
***A01N 59/02*** *(2006.01)* ***A01N 63/50*** *(2020.01)*
***B65B 55/00*** *(2006.01)* ***A01P 1/00*** *(2006.01)*

(86) International application number:
**PCT/EP2016/064347**

(87) International publication number:
**WO 2016/207183 (29.12.2016 Gazette 2016/52)**

(54) **ANTIMICROBIAL COMPOSITIONS COMPRISING FOOD APPROVED ANTIMICROBIALS AND ZINC PYRITHIONE**

ANTIMIKROBIELLE ZUSAMMENSETZUNGEN ENTHALTEND LEBENSMITTELGEEIGNETE ANTIMIKROBIELLE SUBSTANZEN UND ZINKPYRITHION

COMPOSITIONS ANTIMICROBIENNES COMPRENANT DES ANTIMICROBIENS APPROUVES POUR L'ALIMENTAIRE ET ZINC PYRITHIONE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.06.2015 EP 15173440**

(43) Date of publication of application:
**02.05.2018 Bulletin 2018/18**

(73) Proprietor: **Janssen Pharmaceutica NV**
**2340 Beerse (BE)**

(72) Inventors:
- **DE MEYER, Kurt, Mark, Anthony**
**2340 Beerse (BE)**
- **DE BOLLE, Miguel, Francesco, Coleta**
**2340 Beerse (BE)**

(74) Representative: **Verberckmoes, Filip Gerard**
**Johnson & Johnson**
**Patent Law Department**
**Turnhoutseweg 30**
**2340 Beerse (BE)**

(56) References cited:
**EP-A1- 2 468 095** **EP-A2- 2 481 285**
**WO-A1-2014/085740** **CN-A- 104 292 585**
**JP-A- 2013 189 404** **US-A- 4 482 715**
**US-A- 4 533 736** **US-B1- 7 026 308**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 313 185 B1

## Description

The present invention relates to combinations of zinc pyrithione and food-approved antimicrobials which provide a synergistic antimicrobial effect. The food approved antimicrobials are selected from sodium sulfite, sodium bisulfite, and lysozyme. These combinations are useful for the protection of any living or non living material, such as food, crops, plants, fruits, wood, wood products, leather, natural or synthetic textile, fibers, non-wovens, technical textile, plasticized materials and non-plasticized thermoplastics as polypropylene, polyvinylchloride, etc..., paper, wall paper, insulation material, laminates, amino moulding compounds, paints and coatings, fabrics, floor coverings, synthetic fibres like plasticized polymers, hessian, rope and cordage and other biodegradable materials against deterioration due to the action of microorganisms such as bacteria, fungi, yeasts, algae, and the like. Also, the present invention relates to compositions comprising a combination of zinc pyrithione and food-approved antimicrobials selected from sodium sulfite, sodium bisulfite, and lysozyme; in respective proportions to provide a synergistic antimicrobial effect.

Microorganisms are extremely useful, and even indispensable, in processes such as, e.g. alcoholic fermentation, ripening of cheese, baking of bread, production of penicillin, purification of waste water, production of biogas, and the like. However, microorganisms can also be harmful or highly dangerous : by causing infectious diseases, by forming poisonous or carcinogenic metabolites and by attacking valuable materials, disturbing production processes, or impairment of the quality of products.

Antimicrobials are a broad and diverse group of compounds which are able to control microorganisms : *i.e.* to eliminate, kill, or inhibit microorganisms, or to reduce the growth or proliferation of microorganisms such as bacteria, fungi, yeasts and algae. An important group of the antimicrobials are the bactericides and fungicides. Since bacteria and fungi occur everywhere, their destructive activity (biodeterioration) is basically unavoidable. Nevertheless objects can be protected with the aid of compounds that prevent the multiplication of bacteria or fungi at the relevant sites, either by killing them or inhibiting their development.

WO-2014/085740, EP-2,481,285 and EP-2,468,095 disclose synergistic antimicrobial compositions comprising zinc pyrithione and a further antimicrobial being lenacil, flumetsulam, diclosulam or glyphosate for use in the protection of building materials, wood or paper. CN-104292585 discloses an insect repellent composition comprising zinc pyrithione and sodium metabisulfite.

It has now been found that the combination of zinc pyrithione (hereinafter referred to as component (I)) and a food-approved antimicrobial (hereinafter referred to as a component (II)) selected from sodium sulfite, sodium bisulfite, and lysozyme, has a synergistic effect on the control of microorganisms.

Component (I), *i.e.* zinc pyrithione, is a coordination complex first reported in the 1930's. It features two pyridine-derived chelating ligands bound to zinc via oxygen and sulfur atoms. Its IUPAC name is bis(2-pyridylthio)zinc 1,1'dioxide and is represented by the following formula :

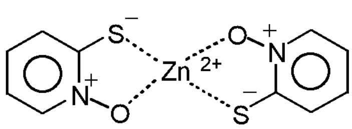

zinc pyrithione

Zinc pyrithione is best known for its use in treating dandruff and seborrheic dermatitis. It is also used in medical applications such as the treatment of psoriasis, eczema, ringworm, athletes foot, atopic dermatitis, tinea and vitiligo.

The food-approved antimicrobial components (II) are antimicrobial substances which are qualified as "foodgrade", *i.e.* they can be consumed without any health hazard. The food-approved antimicrobials are recognizable by their E number label which indicates the substance is approved for use in food by the European Food Safety Authority. The food-approved antimicrobials of the present invention are selected from sodium sulfite (E221), sodium bisulfite (E222), and lysozyme (E1105).

In a first embodiment the food-approved antimicrobial component (II) is selected from sodium sulfite (II-a) and lysozyme (II-b).

In a second embodiment any of the following combinations is envisaged : zinc pyrithione and sodium sulphite; zinc pyrithione and sodium bisulfite; and zinc pyrithione and lysozyme.

The combinations of the present invention have antimicrobial activity against a broad range of microorganisms such as bacteria, fungi, and yeasts. Bacteria include Gram-positive and Gram-negative bacteria.

As used herein, "control" is defined to include the elimination, killing, or inhibition of microorganisms, or to reduce or inhibit the growth or proliferation of microorganisms such as bacteria, fungi, and yeasts.

The combinations of the present invention are useful in the protection of food against microbial attack by microorganisms such as bacteria, fungi, and yeasts. This can be done by incorporating the combinations of the present invention in the materials used for packaging food. Alternatively these food packaging materials can be coated with a composition comprising the combinations of the present invention.

In an embodiment the present invention relates to the use of a combination of zinc pyrithione as a component (I) and as a component (II) a food-approved antimicrobial selected from sodium sulfite, sodium bisulfite, and lysozyme, wherein the ratio by weight of component (I) to component (II) ranges from 4:1 to 1:4 to provide a synergistic antimicrobial effect, to control the growth of microorganisms on food that is packaged with food packaging materials by coating said food packaging materials with said combination or incorporating said combination in said food packaging materials.

In a further embodiment the present invention also relates to a method of controlling the growth of microorganisms on food that is packaged with food packaging materials which method comprises coating or incorporating in said food packaging materials a combination of zinc pyrithione as a component (I) and as a component (II) a food-approved antimicrobial selected from sodium sulfite, sodium bisulfite, and lysozyme, wherein the ratio by weight of component (I) to component (II) ranges from 4:1 to 1:4 to provide a synergistic antimicrobial effect.

Food packaging materials can be, for example, film packaging where the food item is wrapped in the film, plastic wrappers, plastic bag type packages, paper or paper polymer composite sheets, plastic bottles or vials, glass bottles, carboard boxes or cartons. These food packaging materials are made of e.g. paper, carboard, paraffin, polyethylenes, polypropylenes, polytetrafluorethylene, crosslinked or non-crosslinked polypropenes, ethylene-vinyl alcohol polymers, polyvinyl chloride, polystyrene, polycarbonates, polyesters, and polyamides.

A food packaging material coated with a composition comprising a combination of zinc pyrithione as a component (I) and as a component (II) a food-approved antimicrobial, in accordance with the present invention, or a food packaging material incorporating a combination of zinc pyrithione as a component (I) and as a component (II) a food-approved antimicrobial, are also part of the present invention.

The combinations of the present invention are also useful in the prevention of hygienic concerns like unwanted bacterial, fungal or algal growth on surfaces, safety problems like the presence of *Legionella* in closed water systems, *Nosocomial* infections in hospitals, the presence of Methicillin-Resistant *Staphylococcus aureus* (MRSA), odor problems like in fabrics like socks, towels, protective uniforms, shoe linings or in filters or floor coverings. The invention is as well possible to protect areas or items coated with an ultra-hygienic polymer like for the manufacture of electrical devices such as light switches and switch plates; sanitary ware such as toilet seats; and door handles, handrails, baby-changing tables, telephones, and other end-use applications where the highest levels of sanitary protection are needed.

The combinations of the present invention are also useful in the preservation of wood, wood products, leather, natural or synthetic textile, fibers, non-wovens, technical textile, plasticized materials and non-plasticized thermoplastics as polypropylene, polyvinylchloride, etc..., paper, wall paper, insulation material, laminates, amino moulding compounds, paints and coatings, fabrics, floor coverings, synthetic fibres like plasticized polymers, hessian, rope and cordage and biodegradable materials and protect said materials against attack and destruction by bacteria or fungi. As wood or wood products which can be preserved with the compositions according to the present invention is considered, for example, wood products such as timber, lumber, railway sleepers, telephone poles, fences, wood coverings, wicker-work, windows and doors, plywood, particle board, waferboards, chipboard, joinery, timber used above ground in exposed environments such as decking and timber used in ground contact or fresh water or salt water environments, bridges or wood products which are generally used in housebuilding, construction and carpentry. As biodegradable materials besides wood which can benefit from treatment with the compositions of the invention include cellulosic material such as cotton.

In an embodiment, the present invention relates to a method of controlling microbial growth on wood, wood products and biodegradable materials, which comprises applying an antimicrobially effective amount of a combination of a component (I) and a component (II) wherein the ratio by weight of component (I) to component (II) ranges from 4:1 to 1:4 to provide a synergistic antimicrobial effect, to the wood, wood products, leather, natural or synthetic textile, fibers, non-wovens, technical textile, plasticized materials and non-plasticized thermoplastics as polypropylene, polyvinylchloride, etc..., paper, wall paper, insulation material, laminates, amino moulding compounds, paints and coatings, fabrics, floor coverings, synthetic fibres like plasticized polymers, hessian, rope and cordage.

The combinations of the present invention are also useful to control microbial contamination or biofilm formation in several industrial processes like gaskets, pipes and tubings in contact with fluids or involved in fluid transport, conveyer belts, surfaces and plastic components used in food transport, processing or production, and medical activities like medical equipment and devices like catheters, pacemakers, implants, surgery equipment and sterile textile.

The combinations of the present invention are also useful to control bacterial, fungal or algal growth on surfaces and herewith causing aesthetical problems for the materials considered.

The combinations of the present invention are also useful to protect engineering materials against microorganisms. Engineering materials which are intended to be protected can be glues, size, paints and plastic articles, cooling lubricants, aqueous hydraulic fluids and other non-living materials which can be infested with, or decomposed by, microorganisms.

In an embodiment, the present invention relates to a method of controlling microbial growth on engineering materials, which comprises applying an antimicrobially effective amount of a combination of a component (I) and a component (II), wherein the ratio by weight of component (I) to component (II) ranges from 4:1 to 1:4 to provide a synergistic antimicrobial effect, to the engineering materials to be treated.

The combinations according to the present invention can also be used to protect plants, or parts of plants, e.g. fruit, blossoms, flowers, foliage, stems, roots, cuttings, tubers of plants, fruit and seeds.

In an embodiment, the present invention relates to a method of controlling microbial growth on plants, parts of plants, fruit and seeds, which comprises applying an antimicrobially effective amount of a combination of a component (I) and a component (II), wherein the ratio by weight of component (I) to component (II) ranges from 4:1 to 1:4 to provide a synergistic antimicrobial effect, to the plants, parts of plants, fruit and seeds to be treated.

The relative proportions of a component (I) and a component (II) in the compositions of the present invention comprising a combination of a component (I) and a component (II) are those proportions which result in a synergistic antimicrobial effect, when compared to a composition including, as an active ingredient, either component (I) alone or a component (II) alone. The synergistic antimicrobial effect can be measured using the Poison Plate Assay as described in Experiment 1. Particular proportions by weight of the amount of component (I) to component (II) in the combinations of the present invention lie in the range from 4:1 to 1:4, or from 3:1 to 1:3, or from 2:1 to 1:2.

The quantity of each of the active ingredients in the combinations according to the present invention will be so that a synergistic antimicrobial effect is obtained. The concentration of a component (I) and a component (II) in the ready to use compositions is also dependent upon the specific conditions wherein these compositions are used. In particular it is contemplated that the ready to use compositions of the present invention comprise component (I) in a range from 10 mg/l to 10 g/l. The component (II) is present in an amount ranging from 10 mg/l to 10 g/l.

The compositions according to the present invention comprise a combination of a component (I) and a component (II) in respective proportions having a ratio by weight of 4:1 to 1:4 to provide a synergistic antimicrobial effect, and furthermore one or more acceptable carriers.

These carriers are any material or substance with which the composition of components (I) and (II) is formulated in order to facilitate its application/dissemination to the locus to be treated, for instance by dissolving, dispersing, or diffusing the said composition, and/or to facilitate its storage, transport or handling without impairing its antimicrobial effectiveness. Said acceptable carriers may be a solid or a liquid or a gas which has been compressed to form a liquid including the physical condition described as supercritical fluid, *i.e.* the compositions of this invention can suitably be used as concentrates, emulsions, emulsifiable concentrates, oil miscible suspension concentrates, oil-miscible liquid, soluble concentrates, solutions, granulates, dusts, sprays, aerosols, pellets, or powders.

In many instances the antimicrobial compositions to be used directly can be obtained from concentrates, such as e.g. emulsifiable concentrates, suspension concentrates, or soluble concentrates, upon dilution with aqueous or organic media, such concentrates being intended to be covered by the term composition as used in the definitions of the present invention. Such concentrates can be diluted to a ready to use mixture in a spray tank shortly before use. Preferably the compositions of the invention should contain from about 0.01 to 95% by weight of the combination of components (I) and (II). More preferably this range is from 0.1 to 90% by weight. Most preferably this range is from 1 to 80% by weight, depending on the type of formulation to be selected for specific application purposes, as further explained in details hereinafter.

An emulsifiable concentrate is a liquid, homogeneous formulation of the components (I) and (II) to be applied as an emulsion after dilution in water. A suspension concentrate is a stable suspension of the active ingredients in a fluid intended for dilution with water before use. A soluble concentrate is a liquid, homogeneous formulation to be applied as a true solution of the active ingredients after dilution in water.

In a further embodiment the present invention also relates to a composition only containing a combination of the two antimicrobial ingredients : *i.e.* zinc pyrithione as a component (I) and as a component (II) a food-approved antimicrobial selected from sodium sulfite, sodium bisulfite, and lysozyme, without other antimicrobial ingredients being present; and one or more carriers. This also applies to the methods of treatment as described in the present invention. Hence also compositions are covered containing a combination of zinc pyrithione as a component (I) and as a component (II) a food-approved antimicrobial selected from sodium sulfite, sodium bisulfite, and lysozyme; wherein the ratio by weight of component (I) to component (II) ranges from 4:1 to 1:4 to provide a synergistic antimicrobial effect, without other antimicrobial ingredients being present; and one or more carriers. The suitable proportions by weight of the amount of component (I) to component (II) in these antimicrobial compositions lie in the range from 4:1 to 1:4, or from 3:1 to 1:3, or from 2:1 to 1:2. The carriers are described hereinbefore.

Post-harvest treatment of harvested crops against phytopathogenic microorganisms can prevent or reduce certain post-harvest storage disorders such as e.g. scald, scorch, softening, senescent breakdown, lenticel spots, bitter pit, browning, water core, vascular breakdown and the like.

Antimicrobial compositions according to the present invention can be of use in post-harvest treatment of crops, in particular fruit. In the latter instance, the fruit will be sprayed with or dipped or drenched into a liquid formulation or the fruit may be coated with a waxy composition. The latter waxy composition conveniently is prepared by thoroughly mixing a suspension concentrate with a suitable wax. The formulations for spray, dip or drench applications may be prepared upon dilution of a concentrate such as, e.g. an emulsifiable concentrate, a suspension concentrate or a soluble liquid, with an aqueous medium. Such concentrate in most instances consists of the active ingredients, a dispersing or

suspending agent (surfactant), a thickening agent, a small amount of organic solvent, a wetting agent, optionally some anti-freeze agent, and water.

The antimicrobial compositions of the present invention can also be used for protecting seed against microorganisms. To that effect the present antimicrobial compositions can be coated on seed, in which case the seed grains are drenched consecutively with a liquid composition of the active ingredients or if they are coated with a previously combined composition. The compositions can also be sprayed or atomised onto the seed using e.g. a spinning disc atomiser.

The combination of components (I) and (II) is preferably applied in the form of compositions wherein both said components are intimately admixed in order to ensure simultaneous administration to the materials to be protected. Administration or application of both components (I) and (II) can also be a "sequential-combined" administration or application, *i.e.* component (I) and one or more components (II) are administered or applied alternatively or sequentially in the same place in such a way that they will necessarily become admixed together at the locus to be treated. This will be achieved namely if sequential administration or application takes place within a short period of time e.g. within less than 24 hours, preferably less than 12 hours. In case of wood preservation the wood usually needs to be dried between the individual applications thus the period between the sequential applications might be expanded up to several weeks until the solvent used for the first treatment has been evaporated and / or the wood reached the wood moisture content again suitable for the application of the antimicrobial formulation. This alternative method can be carried out for instance by using a suitable single package comprising at least one container filled with a formulation comprising the active component (I) and at least one container filled with a formulation comprising an active component (II). Therefore the present invention also encompasses a product containing :

- (a)a composition comprising zinc pyrithione, or a salt thereof, as a component (I); and
- (b)a composition comprising as a component (II) a food-approved antimicrobial selected from sodium sulfite, sodium bisulfite, and lysozyme;

as a combination for simultaneous or sequential use, wherein said compositions (a) and (b) are in respective proportions having a ratio by weight of component (I) to component (II) ranging from 4:1 to 1:4 to provide a synergistic antimicrobial effect. Such products may consist of a suitable package comprising separate containers wherein each container comprises component (I) or component (II), preferably in formulated form. Such formulated forms in general have the same composition as described for the formulations containing both active ingredients.

Appropriate carriers and adjuvants for use in the compositions of the present invention may be solid or liquid and correspond to suitable substances known in the art of formulation, such as, for example natural or regenerated mineral substances, solvents, dispersants, surfactants, wetting agents, adhesives, thickeners, binders, fertilizers or antifreeze agents.

The components (I) and (II) are used in unmodified form or, preferably, together with the adjuvants conventionally employed in the art of formulation. They are therefore formulated following art-known procedures to emulsifiable concentrates, directly sprayable or dilutable solutions, dilute emulsions, wettable powders, soluble powders, dusts, granulates, and also encapsulations in e.g. polymer substances. As with the nature of the compositions, the methods of application, such as spraying, atomizing, dusting, scattering, pouring, smoke generation and thermonebulisation are chosen in accordance with the intended objectives and the prevailing circumstances.

The formulations, *i.e.* the compositions, preparations or mixtures comprising the active ingredients and, where appropriate, a solid or liquid adjuvant, are prepared in known manner, e.g. by homogeneously mixing and/or grinding the active ingredients with extenders, e.g. solvents, solid carriers and, where appropriate, surface-active compounds (surfactants).

Suitable solvents are aromatic hydrocarbons, preferably the fractions containing 8 to 12 carbon atoms, e.g. dimethylbenzene mixtures or substituted naphthalenes, phthalates such as dibutyl phthalate or dioctyl phthalate, aliphatic or alicyclic hydrocarbons such as cyclohexane or paraffins, alcohols and glycols and their ethers and esters, such as ethanol, ethylene glycol, ethylene glycol monomethyl or monoethyl ether, ketones such as cyclohexanone, strongly polar solvents such as *N*-methyl-2-pyrrolidone, dimethylsulfoxide or dimethylformamide, as well as vegetable oils or epoxidised vegetable oils such as epoxidised coconut oil or soybean oil; or water.

The solid carriers used e.g. for dusts and dispersible powders are normally natural mineral fillers such as calcite, talcum, kaolin, montmorillonite or attapulgite. In order to improve the physical properties it is also possible to add highly dispersed silicic acid or highly dispersed absorbent polymers. Suitable granulated absorbent carriers are of the porous type, for example pumice, broken brick, sepiolite or bentonite; and suitable nonsorbent carriers are materials such as calcite or sand. In addition, a great number of pregranulated materials of inorganic or organic nature can be used, e.g. especially dolomite or pulverised plant residues.

Suitable surface-active compounds to be used in the compositions of the present invention are non-ionic, cationic and/or anionic surfactants having good emulsifying, dispersing and wetting properties. The term "surfactants"

will also be understood as comprising mixtures of surfactants.

Appropriate carriers and adjuvants for use in the compositions of the present invention may be solid or liquid and correspond to suitable substances known in the art for preparing formulations for treating plants or their loci, or for treating plant products, in particular for treating wood, such as, for example, natural or regenerated mineral substances, solvents, dispersants, surfactants, wetting agents, adhesives, thickeners, binders, fertilizers, anti-freeze agents, repellents, colour additives, corrosion inhibitors, water-repelling agents, siccatives, UV-stabilizers and other active ingredients.

Suitable anionic surfactants can be both water-soluble soaps and water-soluble synthetic surface-active compounds.

Suitable soaps are the alkali metal salts, earth alkaline metal salts or unsubstituted or substituted ammonium salts of higher fatty acids ($C_{10}$-$C_{22}$), e.g. the sodium or potassium salts of oleic or stearic acid, or of natural fatty acid mixtures which can be obtained e.g. from coconut oil or tallow oil. In addition, there may also be mentioned fatty acid methyltaurin salts.

More frequently, however, so-called synthetic surfactants are used, especially fatty sulfonates, fatty sulfates, sulfonated benzimidazole derivatives or alkylarylsulfonates. The fatty sulfonates or sulfates are usually in the form of alkali metal salts, earth alkaline metal salts or unsubstituted or substituted ammonium salts and contain an alkyl radical having from 8 to 22 carbon atoms said alkyl also comprising radicals derived from acyl radicals, e.g. the sodium or calcium salt of lignosulfonic acid, of dodecylsulfate or of a mixture of fatty alcohol sulfates obtained from natural fatty acids. These compounds also comprise the salts of sulfuric acid esters and sulfonic acids of fatty alcohol/ethylene oxide adducts. The sulfonated benzimidazole derivatives preferably contain 2 sulfonic acid groups and one fatty acid radical containing 8 to 22 carbon atoms. Examples of alkylarylsulfonates are the sodium, calcium or triethanolamine salts of dodecylbenzene sulfonic acid, dibutylnaphthalene-sulfonic acid, or of a naphthalene-sulfonic acid/formaldehyde condensation product. Also suitable are corresponding phosphates, e.g. salts of the phosphoric acid ester of an adduct of p-nonylphenol with 4 to 14 moles of ethylene oxide, or phospholipids.

Non-ionic surfactants are preferably polyglycol ether derivatives of aliphatic or cycloaliphatic alcohols, or saturated or unsaturated fatty acids and alkylphenols, said derivatives containing 3 to 10 glycol ether groups and 8 to 20 carbon atoms in the (aliphatic) hydrocarbon moiety and 6 to 18 carbon atoms in the alkyl moiety of the alkylphenols.

Further suitable non-ionic surfactants are the water-soluble adducts of polyethylene oxide with polypropylene glycol, ethylenediaminopoly-propylene glycol containing 1 to 10 carbon atoms in the alkyl chain, which adducts contain 20 to 250 ethylene glycol ether groups and 10 to 100 propylene glycol ether groups. These compounds usually contain 1 to 5 ethylene glycol units per propylene glycol unit.

Representative examples of non-ionic surfactants are nonylphenol-polyethoxy ethanols, castor oil polyglycol ethers, polypropylene/polyethylene oxide adducts, tributylphenoxypolyethoxyethanol, polyethylene glycol and octylphenoxypolyethoxy-ethanol. Fatty acid esters of polyethylene sorbitan, such as polyoxyethylene sorbitan trioleate, are also suitable non-ionic surfactants.

## Experimental part

Experiment 1 : poison plate assay (IV 03/2013)

Name of component (I): zinc pyrithione

Name of component (II): sodium sulfite (II-a) lysozyme (II-b)

Stock solutions : 8000 ppm in sterile deionised water.

| Test combinations : | % product A | + | % product B |
|---|---|---|---|
| | 100 | + | 0 |
| | 80 | + | 20 |
| | 67 | + | 33 |
| | 50 | + | 50 |
| | 33 | + | 67 |
| | 20 | + | 80 |
| | 0 | + | 100 |

In the test combinations above, product A is component (I), *i.e.* zinc pyrithione, and product B is a component (II), *i.e.* either sodium sulfite (II-a) or lysozyme (II-b).

Concentration series of total actives: a series of 24 concentrations increasing with steps of 1/3 : 0.27 - 0.35 - 0.47 - 0.63 - 0.84 - 1.13 - 1.50 - 2.00 - 2.67 -3.56 - 4.75 - 6.33 - 8.44 - 11.25 - 15.00 - 20.00 - 26.70 -35.60 - 47.46 - 63.28 - 84.38 - 112.50 - 150.00 - 200.00 ppm.
Culture medium : bacteria: nutrient broth (3 g beef extract and 5 g peptone in 1 liter deionised water, pH = 6.8.)
Experimental set up : 96-well plates containing 300 µl pf inoculum plus 0.75 µl of a 400x concentrated stock solution of the test compounds per well.
Species of test organisms : *Escherichia coli* LMG 8063 *Staphylococcus aureus* LMG 8195/ATCC 6538P
Inoculum : the nutrient medium is inoculated with an actively growing liquid culture of the test bacteria.
Culture conditions : 28°C, 70 % relative humidity, incubation in darkness.

Evaluation: 7 days after inoculation.

Synergy calculation: MIC values (minimum inhibitory concentration in ppm total active ingredient) were noted and synergy was calculated using the Synergy Index method (Kull, F.C., P.C. Eismann, H.D. Sylvestrowicz, and R.L. Mayer (1961) "Mixtures of quaternary ammonium compounds and long-chain fatty acids as antifungal agents" Applied Microbiology 9: 538-541; also see Steinberg, D.C. (2000) "Measuring synergy" cosmetics & Toiletries 115(11): 59-62).

$$\text{Synergy Index (SI)} = \frac{Q_a}{Q_A} + \frac{Q_b}{Q_B}$$

wherein:

- $Q_A$ is the concentration of compound A in ppm, acting alone, which produced an end point (*e.g.* MIC),
- $Q_a$ is the concentration of compound A in ppm, in the mixture, which produced an end point (*e.g.* MIC),
- $Q_B$ is the concentration of compound B in ppm, acting alone, which produced an end point (*e.g.* MIC),
- $Q_b$ is the concentration of compound B in ppm, in the mixture, which produced an end point (*e.g.* MIC).

When the Synergy Index is greater than 1.0, antagonism is indicated. When the SI is equal to 1.0, additivity is indicated. When the SI is less than 1.0, synergism is demonstrated.

Table 1 : MIC-values (minimum inhibitory concentration in ppm) and synergy index of combinations of zinc pyrithione (component (I)) with sodium sulfite (II-a) tested against *Escherichia coli*

| | % (I) + % (II-a) | MIC-values in ppm | Synergy Index |
|---|---|---|---|
| *Escherichia coli* | 100 + 0 | 3.60 | - |
| | 80 + 20 | 3.60 | **0.80** |
| | 67 + 33 | 3.60 | **0.67** |
| | 50 + 50 | 4.80 | **0.68** |
| | 33 + 67 | 8.40 | **0.80** |
| | 20 + 80 | 8.40 | **0.49** |
| | 0 + 100 | 267 | - |

Table 2 : MIC-values (minimum inhibitory concentration in ppm) and synergy index of combinations of zinc pyrithione (component (I)) with lysozyme (II-b) tested against *Staphylococcus aureus*

| | % (I) + % (II-b) | MIC-values in ppm | Synergy Index |
|---|---|---|---|
| *Staphylococcus aureus* | 100 + 0 | 2.00 | - |
| | 80 + 20 | 2.00 | **0.80** |
| | 67 + 33 | 2.70 | **0.90** |
| | 50 + 50 | 2.70 | **0.68** |
| | 33 + 67 | 3.60 | **0.61** |
| | 20 + 80 | 4.80 | **0.49** |
| | 0 + 100 | 267 | - |

Experiment 2 : poison plate assay

Name of component (I): zinc pyrithione

Name of component (II): sodium bisulfite (II-c)

Stock solutions : 8000 ppm in sterile deionised water.

| Test combinations : | % product A | + | % product B |
|---|---|---|---|
| | 100 | + | 0 |
| | 80 | + | 20 |
| | 67 | + | 33 |
| | 50 | + | 50 |
| | 33 | + | 67 |
| | 20 | + | 80 |
| | 0 | + | 100 |

In the test combinations above, product A is component (I), *i.e.* zinc pyrithione, and product B is a component (II), *i.e.* either sodium bisulfite (II-c).

Concentration series of total actives: a series of 24 concentrations increasing with steps of 1/3 : 0.27 - 0.35 - 0.47 - 0.63 - 0.84 - 1.13 - 1.50 - 2.00 - 2.67 -3.56 - 4.75 - 6.33 - 8.44 - 11.25 - 15.00 - 20.00 - 26.70 -35.60 - 47.46 - 63.28 - 84.38 - 112.50 - 150.00 - 200.00 ppm.
Culture medium : half strength potato dextrose broth (2g potato infusion and 10g bacto dextrose in I litre deionised water)
Experimental set up : 96-well plates containing 300 µl pf inoculum plus 0.75 µl of a 400x concentrated stock solution of the test compounds per well.
Species of test organisms : *Saccharomyces cerevisiae* CBS 8803
Inoculum : the nutrient medium is inoculated with an actively growing liquid culture of the test bacteria.
Culture conditions : 28°C, 70 % relative humidity, incubation in darkness.

Evaluation: 7 days after inoculation.

Synergy calculation: as procedure of Experiment 1

Table 3 : MIC-values (minimum inhibitory concentration in ppm) and synergy index of combinations of zinc pyrithione (I) with sodium bisulfite (II-c) tested against *Saccharomyces cerevisiae*

| | % (I) + % (II-c) | MIC-values in ppm | Synergy Index |
|---|---|---|---|
| *Saccharomyces cerevisiae* | 100 + 0 | 2.00 | - |
| | 80 + 20 | 2.00 | **0.80** |
| | 67 + 33 | 2.67 | **0.90** |
| | 50 + 50 | 3.56 | **0.91** |
| | 33 + 67 | 4.75 | **0.81** |
| | 20 + 80 | 8.45 | **0.87** |
| | 0 + 100 | 267 | - |

**Claims**

**1.** A composition comprising a combination of zinc pyrithione as a component (I) and as a component (II) a food-approved antimicrobial selected sodium sulfite, sodium bisulfite and lysozyme;
wherein the ratio by weight of component (I) to component (II) ranges from 4:1 to 1:4 to provide a synergistic antimicrobial effect.

**2.** The composition as claimed in claim 1 wherein component (II) is lysozyme.

**3.** The composition as claimed in claim 1 wherein component (II) sodium bisulfite.

**4.** The composition as claimed in claim 1 wherein component (II) is sodium sulfite.

**5.** The composition as claimed in any one of claims 1 to 4 wherein the ratio by weight of component (I) to component (II) ranges from 3:1 to 1:3, or 2:1 to 1:2.

**6.** Use of a combination of zinc pyrithione as a component (I) and as a component (II) a food-approved antimicrobial selected from sodium sulfite, sodium bisulfite, and lysozyme, wherein the ratio by weight of component (I) to component (II) ranges from 4:1 to 1:4 to provide a synergistic antimicrobial effect, to control the growth of microorganisms on food that is packaged with food packaging materials by coating said food packaging materials with said combination or incorporating said combination in said food packaging materials.

**7.** The use according to claim 6 wherein the ratio by weight of component (I) to component (II) ranges from 3:1 to 1:3, or 2:1 to 1:2.

**8.** A food packaging material coated with a composition as claimed in any of claims 1 to 5.

**9.** Method of controlling microbial growth on leather, natural or synthetic textile, fibers, non-wovens, technical textile, plasticized materials, non-plasticized thermoplastics, paper, wall paper, insulation material, laminates, amino moulding compounds, paints, coatings, fabrics, floor coverings, synthetic fibres, hessian, rope and cordage, which comprises applying to said materials an antimicrobially effective amount of a combination of zinc pyrithione as a component (I) and as a component (II) a food-approved antimicrobial selected from sodium sulfite, sodium bisulfite, and lysozyme; wherein the ratio by weight of component (I) to component (II) ranges from 4:1 to 1:4 to provide a synergistic antimicrobial effect.

**10.** Method of controlling microbial growth on wood or wood products, which comprises applying to said wood or wood products an antimicrobially effective amount of a combination of zinc pyrithione as a component (I) and as a component (II) a food-approved antimicrobial selected from sodium sulfite, sodium bisulfite, and lysozyme; wherein the ratio by weight of component (I) to component (II) ranges from 4:1 to 1:4 to provide a synergistic antimicrobial effect.

**11.** Method of controlling microbial growth on engineering materials, which comprises applying to said engineering materials an antimicrobially effective amount of a combination of zinc pyrithione as a component (I) and as a

component (II) a food-approved antimicrobial selected from sodium sulfite, sodium bisulfite, and lysozyme; wherein the ratio by weight of component (I) to component (II) ranges from 4:1 to 1:4 to provide a synergistic antimicrobial effect.

**12.** Method of controlling microbial growth on plants, parts of plants, fruit and seeds, which comprises applying to said plants, parts of plants, fruit and seeds an antimicrobially effective amount of a combination of zinc pyrithione as a component (I) and as a component (II) a food-approved antimicrobial selected from sodium sulfite, sodium bisulfite, and lysozyme; wherein the ratio by weight of component (I) to component (II) ranges from 4:1 to 1:4 to provide a synergistic antimicrobial effect.

**Patentansprüche**

**1.** Zusammensetzung, umfassend eine Kombination von Zinkpyrithion als eine Komponente (I) und als eine Komponente (II) einer lebensmittelgeeigneten antimikrobiellen Substanz ausgewählt aus Natriumsulfit, Natriumhydrogensulfit und Lysozym,
wobei das Gewichtsverhältnis von Komponente (I) zu Komponente (II) im Bereich von 4:1 bis 1:4 liegt, zur Bereitstellung einer synergistischen antimikrobiellen Wirkung.

**2.** Zusammensetzung nach Anspruch 1, wobei es sich bei Komponente (II) um Lysozym handelt.

**3.** Zusammensetzung nach Anspruch 1, wobei es sich bei Komponente (II) um Natriumhydrogensulfit handelt.

**4.** Zusammensetzung nach Anspruch 1, wobei es sich bei Komponente (II) um Natriumsulfit handelt.

**5.** Zusammensetzung nach einem der Ansprüche 1 bis 4, wobei das Gewichtsverhältnis von Komponente (I) zu Komponente (II) im Bereich von 3:1 bis 1:3 oder 2:1 bis 1:2 liegt.

**6.** Verwendung einer Kombination von Zinkpyrithion als eine Komponente (I) und als eine Komponente (II) einer lebensmittelgeeigneten antimikrobiellen Substanz ausgewählt aus Natriumsulfit, Natriumhydrogensulfit und Lysozym, wobei das Gewichtsverhältnis von Komponente (I) zu Komponente (II) im Bereich von 4:1 bis 1:4 liegt, zur Bereitstellung einer synergistischen antimikrobiellen Wirkung, zur Bekämpfung des Wachstums von Mikroorganismen auf Lebensmitteln, die mit Lebensmittelverpackungsmaterialien verpackt sind, durch Beschichten der Lebensmittelverpackungsmaterialien mit der Kombination oder Einarbeiten der Kombination in die Lebensmittelverpackungsmaterialien.

**7.** Verwendung nach Anspruch 6, wobei das Gewichtsverhältnis von Komponente (I) zu Komponente (II) im Bereich von 3:1 bis 1:3 oder 2:1 bis 1:2 liegt.

**8.** Lebensmittelverpackungsmaterial, beschichtet mit einer Zusammensetzung nach einem der Ansprüche 1 bis 5.

**9.** Verfahren zur Bekämpfung mikrobiellen Wachstums auf Leder, natürlichen oder synthetischen Textilien, Fasern, Vliesstoffen, technischen Textilien, plastizierten Materialien, nicht plastizierten Thermoplasten, Papier, Tapeten, Isoliermaterial, Laminaten, Aminoformverbindungen, Anstreichmitteln, Beschichtungen, Geweben, Fußbodenbelägen, synthetischen Fasern, Jute, Seilen und Schnüren, bei dem man eine antimikrobiell wirksame Menge einer Kombination von Zinkpyrithion als eine Komponente (I) und als eine Komponente (II) einer lebensmittelgeeigneten antimikrobiellen Substanz ausgewählt aus Natriumsulfit, Natriumhydrogensulfit und Lysozym auf die Materialien aufbringt, wobei das Gewichtsverhältnis von Komponente (I) zu Komponente (II) im Bereich von 4:1 bis 1:4 liegt, zur Bereitstellung einer synergistischen antimikrobiellen Wirkung.

**10.** Verfahren zur Bekämpfung von mikrobiellem Wachstum auf Holz oder Holzprodukten, bei dem man eine antimikrobiell wirksame Menge einer Kombination von Zinkpyrithion als eine Komponente (I) und als eine Komponente (II) einer lebensmittelgeeigneten antimikrobiellen Substanz ausgewählt aus Natriumsulfit, Natriumhydrogensulfit und Lysozym auf das Holz bzw. die Holzprodukte aufbringt, wobei das Gewichtsverhältnis von Komponente (I) zu Komponente (II) im Bereich von 4:1 bis 1:4 liegt, zur Bereitstellung einer synergistischen antimikrobiellen Wirkung.

**11.** Verfahren zur Bekämpfung von mikrobiellem Wachstum auf technischen Materialien, bei dem man eine antimikrobiell wirksame Menge einer Kombination von Zinkpyrithion als eine Komponente (I) und als eine Komponente (II) einer

lebensmittelgeeigneten antimikrobiellen Substanz ausgewählt aus Natriumsulfit, Natriumhydrogensulfit und Lysozym auf die technischen Materialien aufbringt, wobei das Gewichtsverhältnis von Komponente (I) zu Komponente (II) im Bereich von 4:1 bis 1:4 liegt, zur Bereitstellung einer synergistischen antimikrobiellen Wirkung.

**12.** Verfahren zur Bekämpfung von mikrobiellem Wachstum auf Pflanzen, Pflanzenteilen, Früchten und Samen, bei dem man eine antimikrobiell wirksame Menge einer Kombination von Zinkpyrithion als eine Komponente (I) und als eine Komponente (II) einer lebensmittelgeeigneten antimikrobiellen Substanz ausgewählt aus Natriumsulfit, Natriumhydrogensulfit und Lysozym auf die Pflanzen, Pflanzenteile, Früchte oder Samen aufbringt, wobei das Gewichtsverhältnis von Komponente (I) zu Komponente (II) im Bereich von 4:1 bis 1:4 liegt, zur Bereitstellung einer synergistischen antimikrobiellen Wirkung.

**Revendications**

**1.** Composition comprenant une combinaison de pyrithione de zinc en tant qu'un composant (I) et en tant qu'un composant (II) un agent antimicrobien de qualité alimentaire choisi parmi le sulfite de sodium, le bisulfite de sodium et le lysozyme ;
le rapport en poids du composant (I) sur le composant (II) se situant dans la plage de 4:1 à 1:4 pour fournir un effet antimicrobien synergistique.

**2.** Composition selon la revendication 1, le composant (II) étant le lysozyme.

**3.** Composition selon la revendication 1, le composant (II) étant le bisulfite de sodium.

**4.** Composition selon la revendication 1, le composant (II) étant le sulfite de sodium.

**5.** Composition selon l'une quelconque des revendications 1 à 4, le rapport en poids du composant (I) sur le composant (II) se situant dans la plage de 3:1 à 1:3, ou de 2:1 à 1:2.

**6.** Utilisation d'une combinaison de pyrithione de zinc en tant qu'un composant (I) et en tant qu'un composant (II) un agent antimicrobien de qualité alimentaire choisi parmi le sulfite de sodium, le bisulfite de sodium et le lysozyme, le rapport en poids du composant (I) sur le composant (II) se situant dans la plage de 4:1 à 1:4 pour fournir un effet antimicrobien synergistique, pour contrôler la croissance de micro-organismes sur un produit alimentaire qui est emballé avec des matériaux d'emballage de produit alimentaire par revêtement desdits matériaux d'emballage de produit alimentaire avec ladite combinaison ou l'incorporation de ladite combinaison dans lesdits matériaux d'emballage de produit alimentaire.

**7.** Utilisation selon la revendication 6, le rapport en poids du composant (I) sur le composant (II) se situant dans la plage de 3:1 à 1:3, ou de 2:1 à 1:2.

**8.** Matériau d'emballage de produit alimentaire revêtu d'une composition selon l'une quelconque des revendications 1 à 5.

**9.** Procédé de contrôle de la croissance microbienne sur du cuir, un textile naturel ou synthétique, des fibres, des non-tissés, un textile technique, des matériaux plastifiés, des thermoplastiques non plastifiés, du papier, du papier peint, un matériau d'isolation, des stratifiés, des composés de moulage de type amino, des peintures, des revêtements, des tissus, des revêtements de sol, des fibres synthétiques, de la toile de jute, une corde et un cordage, qui comprend l'application auxdits matériaux d'une quantité efficace sur le plan antimicrobien d'une combinaison de pyrithione de zinc en tant qu'un composant (I) et en tant qu'un composant (II) un agent antimicrobien de qualité alimentaire choisi parmi le sulfite de sodium, le bisulfite de sodium et le lysozyme ; le rapport en poids du composant (I) sur le composant (II) se situant dans la plage de 4:1 à 1:4 pour fournir un effet antimicrobien synergistique.

**10.** Procédé de contrôle de la croissance microbienne sur du bois ou des produits de bois, qui comprend l'application audit bois ou auxdits produits de bois d'une quantité efficace sur le plan antimicrobien d'une combinaison de pyrithione de zinc en tant qu'un composant (I) et en tant qu'un composant (II) un agent antimicrobien de qualité alimentaire choisi parmi le sulfite de sodium, le bisulfite de sodium et le lysozyme ; le rapport en poids du composant (I) sur le composant (II) se situant dans la plage de 4:1 à 1:4 pour fournir un effet antimicrobien synergistique.

**11.** Procédé de contrôle de la croissance microbienne sur des matériaux d'ingénierie, qui comprend l'application auxdits matériaux d'ingénierie d'une quantité efficace sur le plan antimicrobien d'une combinaison de pyrithione de zinc en tant qu'un composant (I) et en tant qu'un composant (II) un agent antimicrobien de qualité alimentaire choisi parmi le sulfite de sodium, le bisulfite de sodium et le lysozyme ; le rapport en poids du composant (I) sur le composant (II) se situant dans la plage de 4:1 à 1:4 pour fournir un effet antimicrobien synergistique.

**12.** Procédé de contrôle de la croissance microbienne sur des végétaux, des parties de végétaux, des fruits et des graines, qui comprend l'application auxdits végétaux, auxdites parties de végétaux, auxdits fruits et auxdites graines d'une quantité efficace sur le plan antimicrobien d'une combinaison de pyrithione de zinc en tant qu'un composant (I) et en tant qu'un composant (II) un agent antimicrobien de qualité alimentaire choisi parmi le sulfite de sodium, le bisulfite de sodium et le lysozyme ; le rapport en poids du composant (I) sur le composant (II) se situant dans la plage de 4:1 à 1:4 pour fournir un effet antimicrobien synergistique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014085740 A
- EP 2481285 A
- EP 2468095 A
- CN 104292585


### Non-patent literature cited in the description


- **KULL, F.C. ; P.C. EISMANN ; H.D. SYLVESTROWICZ ; R.L. MAYER.** Mixtures of quaternary ammonium compounds and long-chain fatty acids as antifungal agents. *Applied Microbiology,* 1961, vol. 9, 538-541
- **STEINBERG, D.C.** Measuring synergy. *cosmetics & Toiletries,* 2000, vol. 115 (11), 59-62